# EUROPEAN PATENT APPLICATION

(11) **EP 1 343 040 A2**
(43) Date of publication of application: **10.09.2003**
(21) Application number: 02024967.8
(22) Date of filing: 07.11.2002
(51) Int. Cl.: G02B 6/44

(54) **Compact lightweight optical cable with pad**

(30) Priority: 04.03.2002 KR 2002011285
(71) Applicant: SAMSUNG ELECTRONICS CO., LTD., Suwon-City, Kyungki-do (KR)
(72) Inventor: Moon, Seung-Hyun, Suwon-city, Kyungki-do (KR); Park, Kyung-Tae, Suwon-city, Kyungki-do (KR)
(74) Representative: Grünecker, Kinkeldey, Stockmair & Schwanhäusser Anwaltssozietät

(57) **Abstract**

A small, lightweight optical cable with pads (240) is disclosed. The optical cable comprises a tube (220) having the shape of a hollow cylinder and includes multiple cores of optical fibers (210) mounted therein, a sheath (230) formed by an extrusion method to surround the tube in a certain thickness, and a plurality of pads (240) arranged inside the sheath, each pad being separately formed.

## Description

The present invention relates to an optical cable, and more particularly to a high-density optical cable used in an optical communication field.

Currently, there is a high demand for optical cables with high-density, small size and light weight. This is because a large number of optical cables have already been installed in the existing duct lines, so there is a shortage of space for installing new cables. To this end, attempts to reduce outer diameters of optical cables have been made to increase the packing density of optical fibers in order to make the installation of such cables possible in existing narrow ducts.

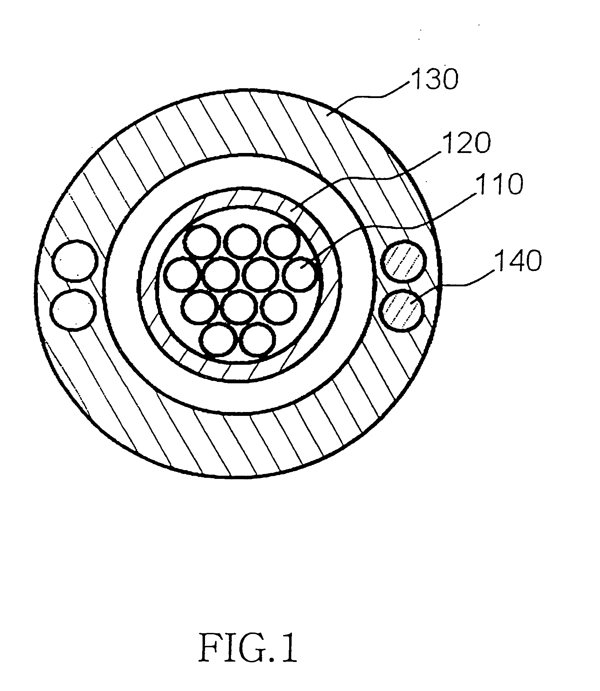

Fig. 1 is a sectional view illustrating the configuration of a conventional small, lightweight optical cable. The optical cable comprises multiple cores of optical fibers 110, a tube 120, four cores of strength members 140, and a sheath 130. The tube 120 has the shape of a hollow cylinder and includes multiple cores of the optical fibers 110 mounted therein. The thickness of the tube 120 is about 1 mm. The sheath 130 is formed by an extrusion method to surround the tube 120 in a certain thickness. The sheath 130 comprises the outermost layer of the small, lightweight optical cable so as to protect its interior against the external environment. To further enhance the integrity of the cable, four cores of strength members 140 are provided to complement the mechanical weakness of the optical cable, to some extent. However, if the external stress is excessive, the strength members 140 tend to deteriorate the mechanical properties of the optical cable.

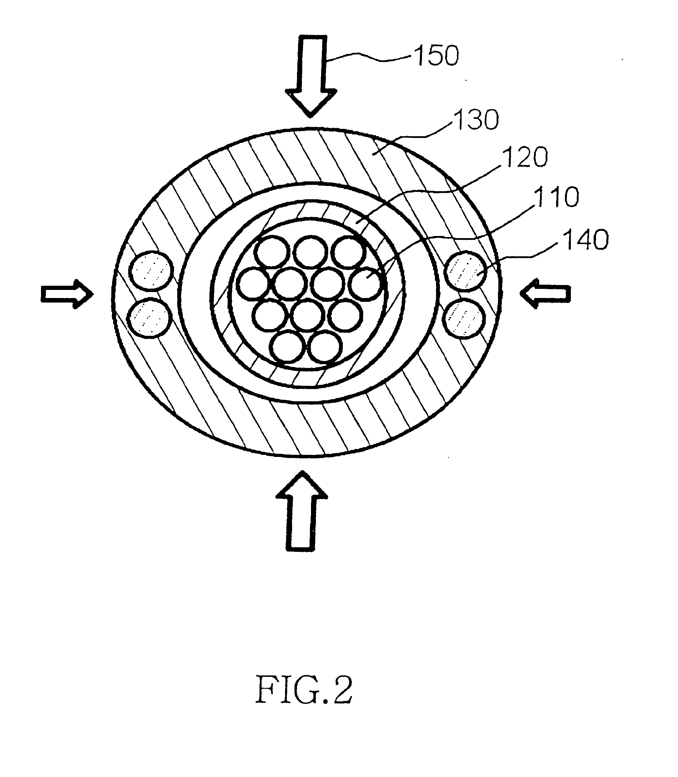

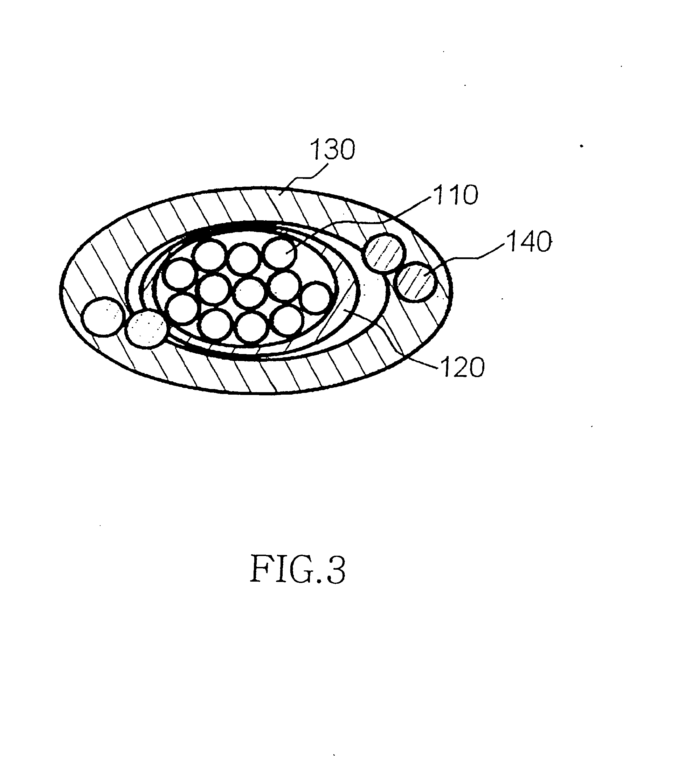

Figs. 2 and 3 illustrate inside of the optical cable when an excess stress is applied thereon.

Referring to Fig. 2, the external stress 150 is applied to an outer sheath, which is an outermost layer of the lightweight optical cable. As a result, as shown in Fig. 3, the lightweight optical cable is severely deformed by the applied stress 150. Meanwhile, the strength members 140, which are arranged inside the sheath 130, penetrate into the inside the sheath and press the tube 120. Note that the tube 120 has a thickness of only about 1mm, but the strength members 140 have a higher degree of hardness than those of the tube 120 or sheath 130, such that the optical fibers 110 mounted inside the tube 120 suffer a severe stress due to the strength members 140.

As described above, there is a problem in the conventional lightweight optical cable despite having a plurality of strength members to increase the mechanical strength of the cable. In particular, if external stress is excessive, the strength members tend to deteriorate the mechanical properties of the lightweight optical cable.

Therefore, it is the object of the present invention to overcome the above problems and provides a small, lightweight optical cable capable of minimizing the deterioration of its mechanical properties upon application of the large external stress.

The lightweight optical cable according to the present invention includes a tube having the shape of a hollow cylinder and including multiple cores of optical fibers mounted therein; a sheath formed by an extrusion technique to surround the tube in a certain thickness; and, a plurality of pads arranged inside the sheath, each pad being separately formed.

The above features and other advantages of the present invention will be more clearly understood from the following detailed description taken in conjunction with the accompanying drawings, in which:
Fig. 1 is a sectional view illustrating the configuration of a conventional small, lightweight optical cable;
Figs. 2 and 3 are views for explaining the small, lightweight optical cable, illustrated in Fig. 1, upon application of excessive stress;
Fig. 4 is a view illustrating the configuration of a small, lightweight optical cable with pads in accordance with a preferred embodiment of the present invention; and,
Fig. 5 is a view illustrating the configuration of a small, lightweight optical cable with pads in accordance with a preferred alternative embodiment of the present invention.

Now, preferred embodiments of the present invention will be described in detail with reference to the annexed drawings. For the purposes of clarity and simplicity, a detailed description of known functions and configurations incorporated herein will be omitted as it may make the subject matter of the present invention rather unclear.

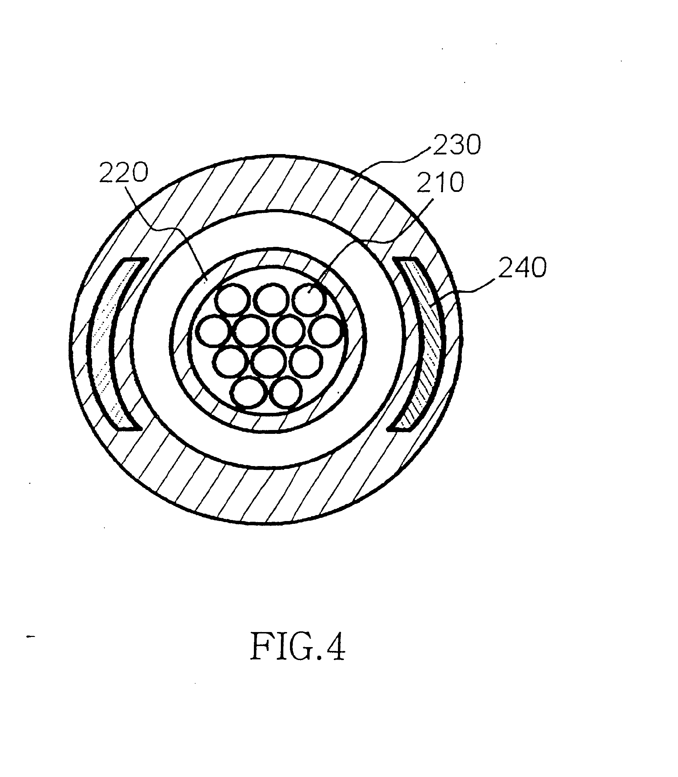

Fig. 4 is a view illustrating the configuration of a small, lightweight optical cable with pads in accordance with a preferred embodiment of the present invention. The inventive optical cable comprises a tube 220, a sheath 230, and a pair of pads 240. The tube 220 has the shape of a hollow cylinder and includes the multiple cores of optical fibers 210 mounted therein. The tube 120 has a thickness of about 1 mm. The sheath 230 is formed by an extrusion method to surround the tube 220 in a certain thickness. The sheath 230 forms the outermost layer of the optical cable, acting to protect its interior against the external environment. As a material for the sheath 230, polyvinyl chloride (PVC) or polyethylene (PE) is available.

The two pads 240 are arranged inside the sheath 230, symmetrically around the tube 220. Each of the pads 240 originally is substantially flat, but it is bent when configured to form as a part of the optical cable. As a result, the pads become crescent-shaped in cross-section. The pads 240 serve to enhance the mechanical properties of the optical cable. As a material for the pads 240, fiberglass reinforced plastic (FRP) is available. As a result, even upon the application of heavy external stress to the optical cable, the pads 240 stand ready to enclose the tubes 220, without penetrating into the inside the sheath 230. For forming the sheath 230, dual extrusion and successive extrusion processes are available.

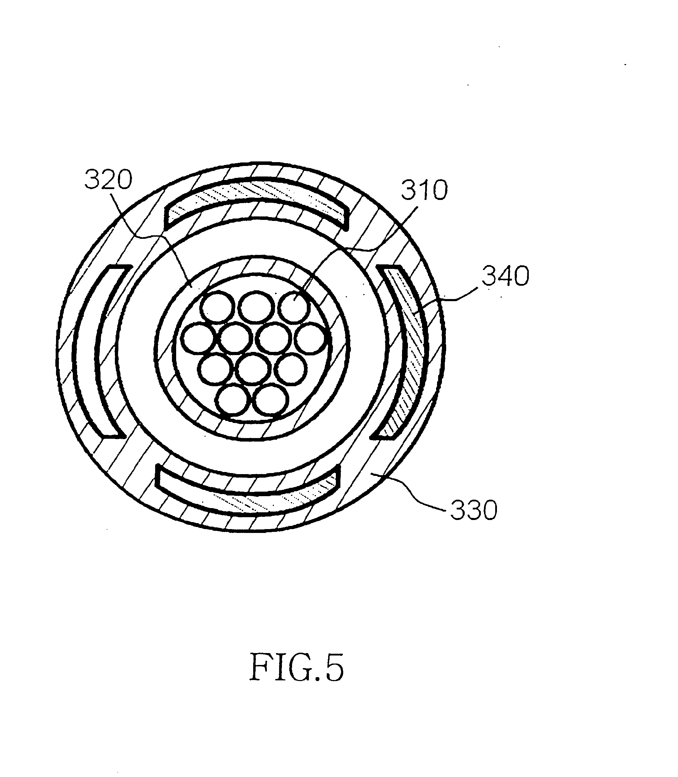

Fig. 5 is a view illustrating the configuration of a small, lightweight optical cable with pads in accordance with another preferred alternative embodiment of the present invention. The inventive optical cable comprises a tube 320, a sheath 330, and four pads 340. The tube 320 has the shape of a hollow cylinder and includes the multiple cores of optical fibers 310 mounted therein. The tube 120 has a thickness of about 1 mm.
The sheath 330 is formed by extrusion to surround the tube 320 in a certain thickness. The sheath 330 forms the outermost layer of the optical cable to protect its interior against the external environment As a material for the sheath 330, polyvinyl chloride (PVC) or polyethylene (PE) is available.

Four pads 340 are arranged inside the sheath 330, symmetrically around the tube 220. Each of the pads 340 originally is substantially flat, but bent upon formation as a part of the optical cable. As a result, the pads 340 become crescent-shaped in cross-section. The pads 340 perform the function of enhancing mechanical properties of the optical cable. As a material for the pads 340, fiberglass reinforced plastic (FRP) is available. Accordingly, even upon application of an excessive external stress to the optical cable, the structure of the pads 340 allows the pads to enclose the tubes 320 without penetrating into the inside the sheath 230. For forming the sheath 330, dual extrusion and successive extrusion processes are available.

As apparent from the above description, the small, lightweight optical cable according to the present invention comprises a plurality of pads arranged inside the sheath. This arrangement has the advantage of efficiently protecting optical fibers inside the tube by ensuring that the pads stand ready to enclose the tubes upon application of an excessive external stress to the optical cable.

## Claims

1. An optical cable comprising:
a tube (220) having a shape of a hollow cylinder including multiple cores of optical fibers (210) mounted therein;
a sheath (230) formed having a predetermined thickness surrounding the tube (220); and,
a plurality of pads (240) arranged inside the sheath (230), each pad being separately formed.

2. An optical cable according to claim 1, wherein the pads (240) have a crescent shaped cross-section.

3. An optical cable according to one of the preceding claims, wherein the material for the pads (340) is fiberglass reinforced plastic (FRP).

4. The optical cable of Claim 1, wherein the sheath is formed using an extrusion technique.

5. The optical cable according to Claim 4, wherein the sheath (230) is formed by a dual extrusion or successive extrusion process.

6. The optical cable according to one of the preceding claims,
wherein the plurality of pads (230) are arranged symmetrically around the tube.
